Europäisches Patentamt

European Patent Office

Office européen des brevets

(11) Numéro de publication : **0 320 377 B1**

# (12) FASCICULE DE BREVET EUROPEEN

(45) Date de publication du fascicule du brevet :
04.03.92 Bulletin 92/10

(51) Int. Cl.$^5$ : **B64C 1/40**

(21) Numéro de dépôt : **88403101.4**

(22) Date de dépôt : **07.12.88**

(54) **Dispositif de fixation d'un objet sur une structure rigide.**

(30) Priorité : **08.12.87 FR 8717056**

(43) Date de publication de la demande :
**14.06.89 Bulletin 89/24**

(45) Mention de la délivrance du brevet :
**04.03.92 Bulletin 92/10**

(84) Etats contractants désignés :
**DE GB IT NL**

(56) Documents cités :
**FR-A- 1 022 731**
**FR-A- 2 195 243**
**GB-A- 2 164 383**
**US-A- 3 248 838**

(73) Titulaire : **AEROSPATIALE Société Nationale Industrielle**
**37, Boulevard de Montmorency**
**F-75781 Paris Cédex 16 (FR)**

(72) Inventeur : **Balza, Jean-Pierre**
**18, chemin des Ramiers**
**F-31700 Blagnac (FR)**

(74) Mandataire : **Mongrédien, André et al**
**c/o SOCIETE DE PROTECTION DES INVENTIONS 25, rue de Ponthieu**
**F-75008 Paris (FR)**

EP 0 320 377 B1

Jouve, 18, rue Saint-Denis, 75001 PARIS

**Description**

L'invention concerne un dispositif permettant de fixer un objet sur une structure rigide.

Dans l'industrie aéronautique, un tel dispositif peut avantageusement être utilisé pour fixer un matelas d'isolation thermophonique sur une lisse, à l'intérieur de la carlingue d'un aéronef. Cette application n'est cependant pas limitative, le dispositif selon l'invention pouvant également être utilisé pour fixer d'autres objets tels que des câbles électriques, dans l'industrie aéronautique ou dans d'autres domaines industriels.

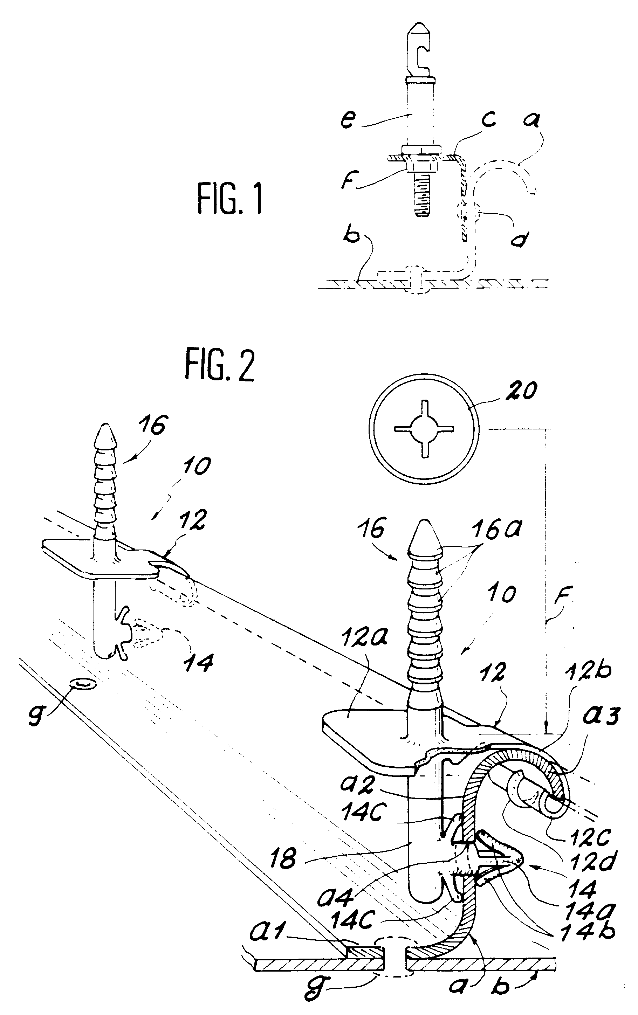

Sur la figure 1 des dessins annexés, on a représenté schématiquement en vue de côté un dispositif utilisé actuellement pour fixer un matelas d'isolation thermophonique sur une lisse, à l'intérieur de la carlingue d'un aéronef.

Sur cette figure, la référence a désigne une lisse fixée à la paroi b de la carlingue de l'aéronef. Le dispositif de fixation du matelas comprend une équerre c, fixée à la lisse a par deux rivets d, et un pion de fixation e fixé à l'équerre e par un écrou f.

L'équerre c est réalisée en tôle pliée, c'est-à-dire qu'elle doit être successivement détourée, pliée, percée, puis traitée en surface.

La fixation de l'équerre c sur la lisse a nécessite ensuite de percer deux trous dans cette dernière, puis de poser les deux rivets.

Enfin, le pion de fixation e, réalisé en matière plastique, doit être monté sur l'équerre c puis fixé sur cette dernière au moyen de l'écrou f.

La description de ces différentes opérations montre que la mise en oeuvre du dispositif de fixation connu représenté sur la figure 1 est relativement longue. De plus, ce dispositif comprend de nombreuses pièces, de telle sorte qu'il est relativement lourd et coûteux.

L'invention a précisément pour objet un dispositif de fixation remplissant les mêmes fonctions que celui qui vient d'être décrit en se référant à la figure 1, tout en permettant un montage presque instantané et en présentant un poids et un prix considérablement réduits.

A cet effet, il est proposé un dispositif de fixation d'un objet sur une structure rigide, ce dispositif étant caractérisé par le fait qu'il comprend un élément d'appui apte à encercler partiellement la structure rigide, un élément de fixation apte à s'emboîter dans un trou formé dans la structure rigide, et un élément d'accrochage dudit objet, ces trois éléments étant réalisés en une seule pièce, de préférence en matière plastique.

Selon un mode de réalisation préféré de l'invention, l'élément de fixation comprend des pattes élastiques aptes à se rétracter lors de l'introduction de cet élément dans le trou de la structure rigide, puis à se détendre en regard d'une face arrière de cette structure, pour bloquer le dispositif sur la structure rigide par effet de harpon.

L'élément de fixation peut alors comprendre également au moins une lèvre élastique apte à venir en appui sur une face avant de la structure rigide, pour appliquer élastiquement les pattes élastiques sur la face arrière de cette structure.

Dans une application privilégiée de l'invention, dans laquelle la structure rigide est une lisse dont une partie a une section approximativement en arc de cercle, l'élément d'appui comprend une surface concave de section approximativement en arc de cercle, complémentaire d'une face avant de ladite partie de la lisse.

L'élément d'appui se termine alors de préférence par une partie en forme de crochet apte à coiffer un bord d'extrémité de la lisse, lorsque ladite surface concave est en appui sur la face avant de ladite partie de la lisse.

Lorsque l'objet présente un trou de fixation, comme c'est notamment le cas lorsque cet objet est un matelas d'isolation thermophonique revêtant intérieurement la carlingue d'un aéronef, l'élément d'accrochage est constitué de préférence par un pion cranté apte à pénétrer dans ce trou de fixation.

Le pion cranté peut notamment être formé par une succession de troncs de cône dont les grandes bases sont tournées vers l'élément d'appui et le dispositif peut comprendre de plus une rondelle de blocage apte à être emboîtée sur le pion cranté, pour assurer le maintien dudit objet.

Un mode de réalisation préféré de l'invention va maintenant être décrit, à titre d'exemple nullement limitatif, en se référant aux dessins annexés dans lesquels :

– la figure 1, déjà décrite, est une vue de côté représentant schématiquement un dispositif de fixation d'un matelas d'isolation sur une lisse, selon la technique utilisée actuellement, et

– la figure 2 est une vue en perspective représentant un dispositif de fixation d'un matelas d'isolation sur une lisse, réalisé conformément à l'invention.

Sur la figure 2, la référence a désigne une lisse placée à l'intérieur de la carlingue d'un aéronef et la référence b désigne une partie de la carlingue, sur laquelle est fixée cette lisse.

La lisse a présente en section approximativement la forme d'une équerre. L'une des branches planes a1 de cette équerre est fixée sur la partie b de la carlingue, par exemple au moyen de rivets g. L'autre branche de l'équerre formée par la lisse a comporte une partie plane a2 orientée perpendiculairement à la première branche, cette partie plane étant prolongée par une partie recourbée a3 ayant approximativement en section la forme d'un demi-cercle. Cette partie a3 est recourbée vers la partie b de la carlingue, du côté opposé à la première branche a1.

La figure 2 représente également deux dispositifs de fixation conformes à l'invention, au moyen desquels un matelas d'isolation thermophonique (non représenté) est fixé sur la lisse a. Chacun de ces dispositifs de fixation est désigné dans son ensemble par la référence 10.

Conformément à l'invention, chaque dispositif de fixation 10 comprend trois éléments remplissant des fonctions distinctes, ces trois éléments étant réalisés en une seule pièce, de préférence en matière plastique moulée.

De façon plus précise, chaque dispositif de fixation 10 comprend un élément d'appui 12, un élément de fixation 14 et un élément d'accrochage 16. Chacun d'entre eux va maintenant être décrit en détail en se référant à la figure 2.

L'élément d'appui 12 se présente approximativement sous la forme d'une plaque comportant une partie plane 12a prolongée par une partie 12b présentant une section approximativement en arc de cercle, apte à venir s'appuyer sur la partie a3 de la lisse a. De façon plus précise, la surface intérieure concave de la partie 12b de l'élément d'appui 12 a une forme complémentaire de celle de la face avant ou extérieure convexe de la partie a3 de la lisse.

A son extrémité, la partie 12b de l'élément d'appui 12 est terminée par une partie 12c, en forme de crochet, pourvue d'une nervure 12d selon le plan médian du dispositif 10. Cette partie 12c vient coiffer le bord d'extrémité de la partie a3 de la lisse lorsque la partie 12b de l'élément d'appui est en appui sur la partie a3 de la lisse.

Lorsque la partie 12b de l'élément d'appui 12 coiffe la partie a3 de la lisse a comme cela vient d'être décrit, la partie plane 12a de l'élément 12 est orientée approximativement parallèlement à la branche a1 de la lisse et à la partie b de la carlingue.

Bien entendu, la forme de la partie 12b de l'élément d'appui dépend de la forme de la structure rigide sur laquelle le dispositif est fixé. Cela signifie que la partie 12b présente une forme différente de celle qui vient d'être décrite lorsque la structure rigide sur laquelle le dispositif doit être fixé est elle-même d'une forme différente.

L'élément de fixation 14 est monté sur la partie plane 12a de l'élément d'appui 12 par l'intermédiaire d'une tige 18, par exemple cylindrique, qui fait saillie perpendiculaiement à cette partie 12a et approximativement au centre de celle-ci, du côté vers lequel est recourbée la partie 12b, c'est-à-dire vers la partie b de la carlingue.

L'élément de fixation 14, qui est situé à l'extrémité de la tige 18, est orienté parallèlement à la partie plane 12a, vers la partie 12b, dans le plan médian de l'élément d'appui 12. De cette manière, lorsque la partie 12b coiffe la partie a3 de la lisse, cet élément de fixation 14 est emboîté dans un trou a4 formé à cet effet dans la partie a2 de la lisse.

L'élément de fixation 14 comprend une partie centrale 14a, au moins deux pattes élastiques 14b et une ou plusieurs lèvres 14c.

Les pattes élastiques 14b sont solidaires de l'extrémité de la partie centrale 14a et orientées en oblique vers la tige 18. Ainsi, lorsque l'élément de fixation 14 est introduit dans le trou a4 de la lisse, les pattes 14b s'effacent vers la partie centrale 14a avant de se détendre élastiquement après avoir traversé le trou a4. Leurs extrémités se trouvent alors en regard de la face arrière ou intérieure de la partie a2 de la lisse.

La ou les lèvres élastiques 14c sont fixées quant à elles à la base de la partie centrale 14a et elles s'écartent rapidement de celle-ci, tout en étant orientées vers l'extrémité de l'élément 14. Ainsi, et comme le montre la figure 2, l'extrémité de chacune des lèvres 14c est en appui sur la face avant ou extérieure de la partie a2 de la lisse lorsque les pattes 14b se trouvent de l'autre côté de cette partie. La ou les lèvres 14c maintiennent ainsi élastiquement les extrémités des pattes 14b en appui contre la face arrière de la partie a2 de la lisse.

Enfin, l'élément d'accrochage 16 fait saillie à partir de la partie 12a de l'élément d'appui 12, du côté opposé à la tige 18 et dans le prolongement axial de celle-ci.

L'élément d'accrochage 16 présente généralement une symétrie de révolution autour de son axe perpendiculaire à la partie 12a et il est constitué par un pion cranté formé par une succession de troncs de cône 16a dont les grandes bases sont tournées vers la partie 12a de l'élément d'appui.

Lorsque les dispositifs 10 ont été fixés et positionnés sur la lisse a au moyen de leurs éléments d'appui 12 et de leurs éléments de fixation 14, les éléments d'accrochage 16 sont orientés perpendiculairement à la partie adjacente b de la carlingue. Le matelas d'isolation thermophonique (non représenté) peut alors être mis en place directement, en engageant des trous de fixation formés dans le matelas sur chaque élément d'accrochage 16. Le maintien du matelas est ensuite assuré en emboîtant sur chacun des pions crantés constituant les éléments d'accrochage 16 une rondelle de blocage 20 qui se verrouille automatiquement sur les crans formés à la surface extérieure de ce pion (flèche F sur la figure 2).

Par rapport à l'état actuel de la technique illustrée sur la figure 1, le dispositif de fixation selon l'invention est d'une mise en oeuvre beaucoup plus simple. En effet, les deux pièces 10 et 20 sont réalisées facilement par moulage d'une matière plastique. Le montage du dispositif est ensuite très rapide puisqu'il s'effectue en une seule opération, par emboîtement, après perçage d'un seul trou a4 dans la lisse.

Le dispositif selon l'invention est en outre beaucoup moins lourd et onéreux que le dispositif actuel représenté sur la figure 1.

Bien entendu, l'invention n'est pas limitée au mode de réalisation qui vient d'être décrit, mais en couvre toutes les variantes. On remarquera notamment que la forme de l'élément d'appui 12 est variable selon la nature de la structure sur lequel il repose. De façon comparable, l'élément d'accrochage 16 peut avoir une forme différente de celle qui a été décrite, notamment lorsque l'objet à fixer n'est pas un matelas mais, par exemple, un faisceau de câbles électriques. Enfin, l'élément de fixation 14 peut comprendre une lèvre unique 14c de forme annulaire, ou plusieurs lèvres circonférentiellement réparties.

**Revendications**

1. Dispositif de fixation d'un objet sur une structure rigide (a), ce dispositif étant caractérisé par le fait qu'il comprend un élément d'appui (12) apte à encercler partiellement la structure rigide, un élément de fixation (14) apte à s'emboîter dans un trou (a4) formé dans la structure rigide, et un élément d'accrochage (16) dudit objet, ces trois éléments étant réalisés en une seule pièce (10).

2. Dispositif selon la revendication 1, caractérisé par le fait que l'élément de fixation (14) comprend des pattes élastiques (14b), aptes à se rétracter lors de l'introduction de cet élément dans le trou (a4) de la structure rigide, puis à se détendre en regard d'une face arrière de cette structure, pour bloquer le dispositif sur la structure rigide (a) par effet de harpon.

3. Dispositif selon la revendication 2, caractérisé par le fait que l'élément de fixation (14) comprend aussi au moins une lèvre élastique (14c) apte à venir en appui sur une face avant de la structure rigide (a), pour appliquer élastiquement les pattes élastiques (14b) sur la face arrière de cette structure.

4. Dispositif selon l'une quelconque des revendications 2 et 3, caractérisé par le fait que l'élément de fixation (14) est monté à l'extrémité d'une tige (18) solidaire d'une partie plane (12a) de l'élément d'appui (12).

5. Dispositif selon l'une quelconque des revendications 1 à 4, caractérisé par le fait que, la structure rigide étant une lisse (a) dont une partie (a3) présente une section approximativement en arc de cercle, l'élément d'appui (12) comprend une surface concave de section approximativement en arc de cercle, complémentaire d'une face avant de ladite partie (a3) de la lisse.

6. Dispositif selon la revendication 5, caractérisé par le fait que l'élément d'appui (12) comprend une partie (12c) en forme de crochet apte à coiffer un bord d'extrémité de la lisse lorsque ladite surface concave est en appui sur la face avant de ladite partie (a3) de la lisse.

7. Dispositif selon l'une quelconque des revendications précédentes, caractérisé par le fait que, ledit objet présentant un trou de fixation, l'élément d'accrochage (16) est constitué par un pion cranté apte à pénétrer dans ce trou de fixation.

8. Dispositif selon la revendication 7, caractérisé par le fait que le pion cranté est formé par une succession de troncs de cône (16a) dont les grandes bases sont tournées vers l'élément d'appui (12).

9. Dispositif selon l'une quelconque des revendications 5 et 6, caractérisé par le fait qu'il comprend de plus une rondelle de blocage (20) apte à être emboîtée sur le pion cranté, pour assurer le maintien dudit objet.

10. Dispositif selon l'une quelconque des revendications précédentes, caractérisé par le fait que ledit objet est un matelas d'isolation thermophonique revêtant intérieurement la carlingue d'un aéronef.

11. Dispositif selon l'une quelconque des revendications précédentes, caractérisé par le fait que ladite pièce (10) est en matière plastique.

**Patentansprüche**

1. Vorrichtung zur Befestigung eines Objektes an einem starren Körper (a), wobei diese Vorrichtung gekennzeichnet ist durch die Tatsache, daß sie ein Stützelement (12), das geeignet ist, teilweise den starren Körper zu umgeben, ein Befestigungselement (14), das geeignet ist, in ein in dem festen Körper gebildetes Loch (a4) zu greifen, und ein Verankerungselement (16) für das Objekt umfaßt, wobei diese drei Elemente aus einem einzigen Stück (10) bestehen.

2. Vorrichtung nach Anspruch 1, gekennzeichnet durch die Tatsache, daß das Befestigungselement (14) elastische Klauen (14b) umfaßt, die geeignet sind, sich beim Einführen dieses Elements in das Loch (a4) des starren Körpers zurückzuziehen, und sich dann gegenüber einer hinteren Seite dieses Körpers zu entfalten, um die Vorrichtung auf dem starren Körper (a) durch einen Widerhakeneffekt zu blockieren.

3. Vorrichtung nach Anspruch 2, gekennzeichnet durch die Tatsache, daß das Befestigungselement (14) außerdem wenigstens eine elastische Lippe (14c) umfaßt, die geeignet ist, auf eine vordere Seite des starren Körpers (a) zu drücken, um die elastischen Klauen (14b) elastisch auf die hintere Seite des Körpers zu bringen.

4. Vorrichtung nach einem der Ansprüche 2 und 3, gekennzeichnet durch die Tatsache, daß das Befestigungselement (14) am Ende einer Stange (18) montiert ist, die mit einem ebenen Teil (12a) des Stützelements (12) verbunden ist.

5. Vorrichtung nach einem der Ansprüche 1 bis 4, gekennzeichnet durch die Tatsache, daß der starre Körper ein Handlauf (a) ist, von dem ein Teil (a3) einen Querschnitt ungefähr in der Form eines Kreisbogens aufweist, und daß das Stützelement (12) eine konkave Oberfläche mit einem Querschnitt ungefähr in der Form eines Kreisbogens aufweist, der komplementär zur Vorderseite dieses Teils (a3) des Handlaufs ist.

6. Vorrichtung nach Anspruch 6, gekennzeichnet durch die Tatsache, daß das Stützelement (12) einen Teil (12c) in der Form eines Hakens aufweist, der geeignet ist, einen Abschlußrand des Handlaufs zu überdecken, wenn die konkave Oberfläche auf die Vorderseite (a3) des Handlaufs drückt.

7. Vorrichtung nach einem der vorhergehenden Ansprüche, gekennzeichnet durch die Tatsache, daß, während das Objekt ein Befestigungsloch aufweist, das Verankerungselement (16) aus einem geripptem Metallstück besteht, das geeignet ist, in dieses Befestigungsloch einzudringen.

8. Vorrichtung nach Anspruch 7, gekennzeichnet durch die Tatsache, daß das gerippte Metallstück aus einer Reihe von Kegelstümpfen (16a) besteht, deren große Basisflächen zum Stützelement (12) gewandt sind.

9. Vorrichtung nach einem der Ansprüche 5 und 6, gekennzeichnet durch die Tatsache, daß sie außerdem eine Blockierungsscheibe (20) umfaßt, die geeignet ist, auf das gerippte Metallstück gefügt zu werden, um das Festhalten des Objekts sicherzustellen.

10. Vorrichtung nach einem der vorhergehenden Ansprüche, gekennzeichnet durch die Tatsache, daß das Objekt eine thermophonische Isolationsmatte ist, die das Innere der Kabine eines luftfahrzeugs bedeckt.

11. Vorrichtung nach einem der vorhergehenden Ansprüche, gekennzeichnet durch die Tatsache, daß das Stück (10) aus plastik besteht.

## Claims

1. Device for fixing an object to a rigid structure (a), characterized in that it comprises a bearing member (12) able to partly encircle the rigid structure, a fixing member (14) able to fit into a hole (a4) forme in the rigid structure and an attachment member (16) for said object, said three members being made in one piece (10).

2. Device according to claim 1, characterized in that the fixing member (14), comprises elastic tabs (14b) able to retract during the introduction of said member into the hole (a4) in the rigid structure and then expand facing a rear face of said structure in order to lock the device on the rigid structure (a) by the harpon effect.

3. Device according to claim 2, characterized in that the fixing member (14) also comprises at least one elastic lip (14c), which can bear on a front face of the rigid structure (a) to elastically poly the elastic tabs (14b) to the rear face of said structure.

4. Device according to either of the claim 2 and 3, characterized in that the fixing member (14) is mounted on the end of a rod (18) integral with a planar portion (12a) of the bearing member (12).

5. Device according to any one of the claim 1 to 4, characterized in that with the rigid structure being a stringer (a), whereof a portion (a3) has an approximately circular arc-shaped section, the support member (12) comprises an approximately circular arc section concave surface complimentary of a front face of said portion (a3) of the stringer.

6. Device according to claim 5, characterized in that the support member (12) comprises a hook-shaped portion (12c) able to cover a terminal edge of the stringer when said concave surface bears on the front face of said stringer portion (a3).

7. Device according to any one of the preceding claim, characterized in that said object has a fixing hole, the attachment member (16) being constituted by a serrated pin able to penetrate said hole.

8. Device according to claim 7, characterized in that the serrated pin is formed by a succession of truncated cones (16a), whereof the large bases are turned towards the support member (12).

9. Device according to either of the claims 5 and 6, characterized in that it also comprises a locking washer (20) which can be fitted onto the serrated pin to hold said object in place.

10. Device according to any one of the preceding claims, characterized in that said object is a thermophonic insulation cushion internally covering an aircraft fuselage.

11. Device according to any one of the preceding claims, characterized in that said part (10) is made from a plastics material.

# FIG. 1

# FIG. 2